# EUROPEAN PATENT SPECIFICATION

(11) **EP 1 453 593 B1**
(45) Date of publication and mention of the grant of the patent: **08.03.2006**
(21) Application number: 02790484.6
(22) Date of filing: 11.12.2002
(51) Int. Cl.: B01D 63/06, B01D 29/35

(54) **FILTER ELEMENT AND FILTER APPARATUS FOR CROSS-FLOW FILTRATION PROCESSES**
FILTERELEMENT UND -APPARAT FÜR CROSS-FLOW-FILTRATIONSPROZESSE
ELEMENT ET APPAREIL DE FILTRATION POUR PROCESSUS DE FILTRATION TANGENTIELLE

(30) Priority: 12.12.2001 DE 10160855
(43) Date of publication of application: 08.09.2004
(73) Proprietor: PALL CORPORATION, East Hills, New York 11548 (US)
(72) Inventor: HEIDENREICH, Steffen, 74597 Stimpfach (DE); BERGMANN, Martin, 95632 Wunsiedel (DE); WALCH, Astrid, 74594 Kressberg (DE)
(74) Representative: Hoeger, Stellrecht & Partner Patentanwälte
(86) International application number: PCT/EP2002/014053
(87) International publication number: WO 2003/049842

(56) References cited:
- DE-A- 4 131 407
- DE-A- 19 854 319
- GB-A- 2 159 729
- US-A- 4 032 454

## Description

The invention pertains to a filter element, in particular, a ceramic filter element, for the cross-flow filtration of fluids, in particular, of liquids, according to the preamble of Claim 1. The invention also pertains to an apparatus with such a filter element according to the preamble of Claim 11.

Ceramic filter elements of this type are, for example, distributed under the brand name "Schumasiv" by USF Schumacher Dmwelt- und Trenntechnik GmbH. These filter elements consist of cylindrical filter elements of Al₂O₃ which comprise one or more axially parallel flow channels. The fluid to be filtered is guided from the inflow side to the outflow side of the filter element in these flow channels, wherein the filtrate flows radially outward through the support member due to the excess pressure in the flow channels and is collected on the outer side. The unfiltered portion of the fluid to be filtered is discharged on the end of the filter element on the outflow side. This filtration method is referred to as the cross-flow filtration or tangential-flow filtration method.

The flow channels are lined with a membrane layer that, depending on the pore size, consists of Al₂O₃, ZrO₂ or TiO₂. Pore sizes that cover the entire range from microfiltratioin or ultrafiltration processes up to nanofiltration processes can be produced with finely graduated manufacturing conditions. The tubular single-channel or multichannel filter elements are suitable for use under abrasive or chemically aggressive conditions. The high temperature resistance in comparison with organic membranes opens up other interesting application options. Such filter elements are preferably used for filtration processes in the food industry, the pharmaceutical industry, the chemical industry, the oil/water separation and the purification of sewage water.

The maximum outer diameter of such filter elements and consequently the attainable filter surface per receptacle volume are limited because it must be ensured that the filtrate can still be discharged from the inner flow channels via the support member. Measurements have shown that the inner channels of a 19-channel element which amount to more than 1/3 of the filtration surface only contribute 10 % to the filtration capacity.

Several proposals have been made in order to solve this problem and to allow the use of monoliths with a large outer diameter. For example, EP 0 609 275 proposes a wedge-shaped widening of the webs that discharge the filtrate, with US 5,855,781 and WO 0050156 proposing the discharge of the filtrate through slots that extend through the monolithic body and lead radially outward. However, both proposed solutions result in a reduction of the filtration surface.

US 6,126,833 describes a filter apparatus for cross-flow filtration processes which contains a filter element formed of porous segments, wherein the segments need to be connected to one another with cement. Channels for fluid to be filtered and filtrate channels are arranged in the filter element and form a complex and complicated channel system within the filter element in order to convey the filtrate into the filtrate collection zone that surrounds the filter element. This solution also results in a reduction of the filtration surface and is extremely cost-intensive with respect to its manufacture.

US 5,108,601 describes one-piece filter elements with filtrate collection chambers in the interior of the filter elements, wherein the filtrate collection chambers are connected to a complicated filtrate channel system that longitudinally and laterally extends through the filter element.

US 4,032,454 describes a filter element with a macroporous support member, in which several membrane-lined channels for unfiltered fluid are provided, for example, in the form of a one-dimensional arrangement. A single filtrate channel that is not lined with a membrane is provided on the edge of this arrangement parallel to these channels for fluid to be filtered. This single filtrate channel is closed on the inflow side and provided with a discharge pipe on the outflow side. This arrangement has the disadvantage that a single filtrate channel needs to accommodate and discharge the entire filtrate such that the filtration capacity is limited by the volumetric capacity of the filtrate channel.

DE 4131407 A1 discloses a filtration module comprising an oblong one-piece porous support member of circular or polygonal cross-section including a plurality of parallel channels for unfiltered fluid and a plurality of parallel filtrate channels all extending from the inflow side to the outflow side of the support member. The outer surface of the porous support member is sealed off by a coating limiting draining of the filtrate to the filtrate channels. The channels for unfiltered fluid are lined with a membrane.

The invention is based on the objective of developing a filter element for cross-flow filtration processes, in which essentially all channels for fluid to be filtered, in particular, the inner channels for fluid to be filtered, contribute to the filtration capacity, wherein said filter element should also be easy to handle. The invention also aims to make available a corresponding filter apparatus.

This objective is attained with a filter element according to claim 1.

Due to the regular arrangement of the filtrate channels, the distance to be traveled by the filtrate from all channels for unfiltered fluid to the filtrate channels is approximately identical such that the outer channels for fluid unfiltered no longer contribute the vast majority of the filtration capacity due to their short distance from the outer peripheral surface. In this case, all channels for unfiltered fluid equally contribute to the filtration capacity.

The arrangement and the number of filtrate channels need to be chosen in accordance with the size of the filter element and the number of channels for unfiltered fluid, namely such that short distances between the channels for unfiltered fluid and the filtrate channels are observed. This means that the number of filtrate channels may correspond to the number of channels for unfiltered fluid. In order to achieve a large filtration surface, the number of filtrate channels is usually chosen smaller. However, the filtrate channels are arranged such that none of the channels for unfiltered fluid are unfavorably affected. This makes it possible to manufacture filter elements with large diameters. In filter elements according to the state of the art, this was not possible because, in particular, the inner channels for unfiltered fluid were unfavorably affected. This means that the filter elements can be much better adapted to the respective filtration task without having to combine several smaller filter elements. In addition, the filter surface per receptacle volume is significantly increased.

The channels for unfiltered fluid preferably have the same diameter as the filtrate channels such that, if so required, decisions regarding the arrangement of the filtrate channels can be made after the manufacture of the filter element and before the membrane layer is applied.

The arrangement is preferably chosen in such a way that each channel for unfiltered fluid is situated adjacent to at least one filtrate channel. In this variation, the filtrate flows through only one wall of the support member.

According to another advantageous embodiment, two channels for unfiltered fluid are respectively arranged between two filtrate channels.

Another advantage can be seen in the fact that conventional filter elements merely need to be adapted in such a way that some of the flow channels which are usually used for the unfiltered fluid serve as filtrate channels.

However, this makes it necessary to close these flow channels on the inflow end of the filter element. A fluid-tight sealing element is preferably used for this purpose on the inflow end. The thickness of the sealing element preferably is D₁ ≥ D₂, wherein D₂ is the minimum wall thickness between two flow channels.

The cross section of the flow channels may be circular or polygonal, in particular, hexagonal. Polygonal cross sections are particularly advantageous because the wall thickness between the flow channels can be realized identical at all locations, wherein a honeycomb structure also makes it possible to optimally utilize the available space.

The support member and/or the membrane preferably consist(s) of aluminum oxide, silicone carbide, titanium dioxide, silicone dioxide, zirconium oxide, calcium aluminate or aluminosilicates.

The membrane preferably has a pore size between 0.005 and 1.2 µm.

The filtrate collection device forms part of the filter element and, according to a first embodiment, comprises several pipes that are connected to the filtrate channels with one end and connected to a collecting pipe with the other end. It would also be conceivable to utilize hoses instead of pipes. The pipes or hoses are, for example, either inserted into the filtrate channels or bonded thereto.

The filtrate collection device may, according to another embodiment, comprise a collecting disk that is fixed on the filter element on the outflow side. The diameter of the collecting disk preferably corresponds to the diameter of the filter element, wherein the collecting disk may, for example, be bonded onto the end face of the filter element.

According to one preferred embodiment, the collecting disk contains openings for the filtrate and the unfiltered fluid, as well as at least one connecting channel, wherein the filtrate openings lead into the collecting channel.

The collecting channel preferably ends on the outer periphery of the collecting disk.

The collecting disk may consist of one or more sections.

The invention further pertains to an apparatus for the cross-flow filtration of fluids according to claim 11.

The filtrate collection device preferably contains a collecting pipe or a collecting hose that leads outward through the wall of the housing.

The collecting channel of the filtrate collection device preferably leads into the filtrate collection chamber-that is provided in the filter housing anyhow, namely on the outer periphery of the collecting disk.

This provides the advantage that the filtrate from the filtrate channels can be easily combined with the filtrate emerging through the peripheral surface of the filter element.

If several filter elements are arranged in the filter housing, the collecting pipes or collecting channels may individually lead outward depending on the design and arrangement of the filter element. It would also be conceivable to connect the filtrate collection devices to a common filtrate discharge line.

The filter element may be prefabricated together with the filtrate collection device such that the handling is simplified, e.g., when exchanging the filter elements. The arrangement with the collecting disk, in particular, provides the advantage that filter elements of different filtrate channel configurations can be installed into a filter housing in such a way that the outside dimensions of the filter element remain unchanged. Consequently, it is easily possible to exchange a filter element without having to carry out modifications in or on the filter housing, namely because the filtrate collection device that is adapted to the arrangement of the filtrate channels is already fixed on the filter element and the filtrate outlet leads into the existing filtrate collection chamber.

Exemplary embodiments of the invention are described in greater detail below with reference to the figures. The figures show:
- Figure 1: a perspective representation of a cylindrical filter element with filtrate channels that are closed on the inflow side;

- Figure 2: a vertical section through the filter element shown in Figure 1 along the line II-II, wherein said filter element is inserted into a filter apparatus;
- Figure 3: an enlarged representation of the detail X in Figure 2;
- Figure 4: a vertical section through another embodiment of a filter apparatus;
- Figure 5: a top view of a collecting disk;
- Figure 6: a perspective representation of the collecting disk shown in Figure 5;
- Figures 7a and b: two different arrangements of filtrate channels and channels for fluid to be filtered, and
- Figure 8: a section through a filter apparatus with several filter elements.

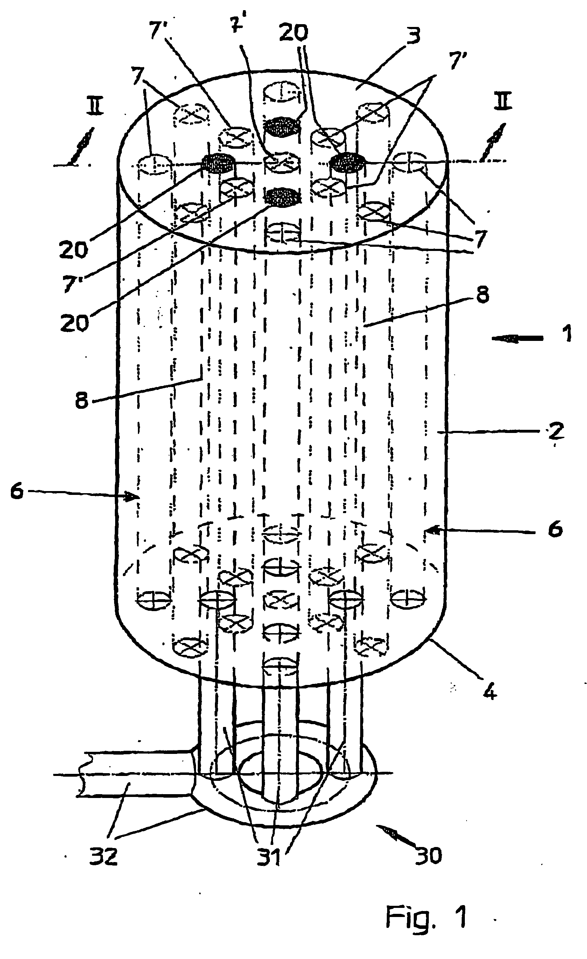

Figure 1 shows a filter element 1 with a cylindrical peripheral wall 2, an upper end face 3 that forms the inflow side or end and a lower end face 4 that forms the outflow side or end. Several flow channels 6 are arranged adjacent to one another in the interior of the support member of the filter element in an axially parallel fashion such that a honeycomb-like structure is achieved. Part of the flow channels 6 form channels 7 for fluid to be filtered if they are open on both end faces 3 and 4, while other flow channels 6 form filtrate channels 8 if they are closed with a sealing element 20 on the end face 3, i.e., on the inflow side.

In the arrangement shown in Figure 1, the filtrate channels 8 are regularly distributed between the channels 7 for unfiltered fluid. The arrangement is chosen in such a way that each of the inner channels 7' for fluid to be filtered respectively borders on at least two filtrate channels 8.

A filtrate collection device 30 forms part of the filter element. In the embodiment shown, this filtrate collection device comprises pipes 31 that are connected to the filtrate channels 8 that end in a common collecting pipe 32 consisting of an annular pipe and an outlet pipe.

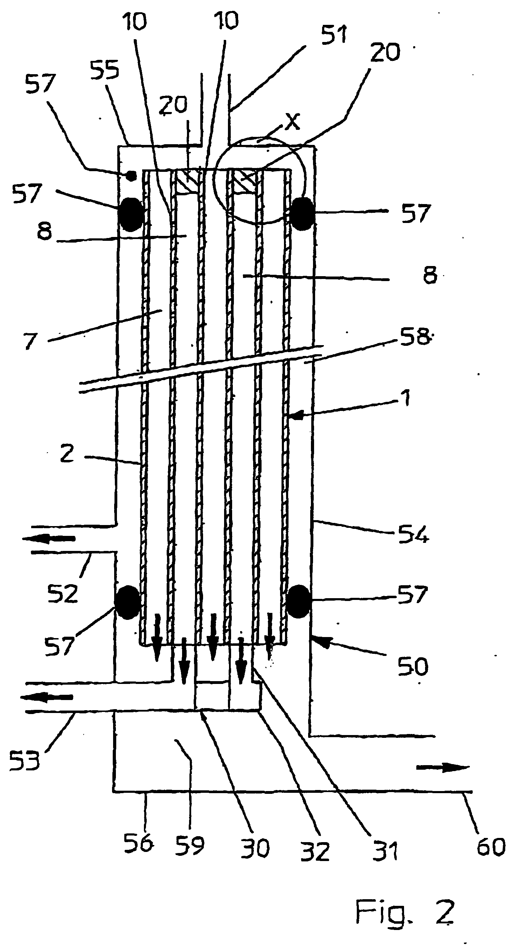

Figure 2 shows a section through a filter apparatus with a filter element 1 according to Figure 1. The line of section through the filter element 1 extends along the line II-II in Figure 1. The filter apparatus contains a filter housing 50 that, in accordance with the shape of the inserted filter element 1, contains a cylindrical peripheral wall 54, an upper wall 55 and a lower wall 56. An inlet 51 for fluid to be filtered is arranged in the upper wall 55, and a first filtrate outlet 52 is arranged in the peripheral wall 54. An outlet 60 for fluid to be filtered is provided in the lower region of the filter housing 50 in order to discharge the retained matter.

The filter element 1 is spaced apart from the housing walls 54, 55 and 56, wherein sealing elements, in particular, ring seals 57, are arranged between the cylindrical peripheral wall 2 of the filter element 1 and the inner side of the peripheral wall 54 of the filter housing 50. The sealing elements 57 respectively engage on the filter element 1 at the highest or lowest possible point such that a filtrate collection chamber 58 of the largest possible size is formed in between. The first filtrate outlet 52 is accordingly arranged in the region between the upper and the lower sealing element 57.

The filter element 1 contains a series of flow channels 6 that extend in the axial direction of the filter element 1 and are divided into channels 7 for unfiltered fluid and filtrate channels 8 as described above with reference to Figure 1.

The channels 7 for fluid to be filtered are open on both ends such that the fluid introduced through the inlet 51 for fluid to be filtered flows through the channels 7 from the top to the bottom as indicated by the arrows, wherein this fluid is able to flow into the collection chamber 59 for unfiltered fluid which is arranged underneath the filter element 1 at the lower end. The retained matter is discharged via the outlet 60 for unfiltered fluid.

During the filtration process, the filtrate initially flows through the walls 10 that limit the filtrate channels 8 and then downward to the filtrate collection device 30 within the filtrate channels 8. As already described above with reference to Figure 1, the filtrate collection device consists of pipes 31 that are, for example, bonded to the outlets of the filtrate channels 8 in a fluid-tight fashion. The pipes 31 lead into the collecting tube 32 that extends outward through the peripheral wall 54 of the filter housing 50 and forms the second filtrate outlet 53. The pipes 31 may also be fixed on the collecting pipe 32 in the form of pipe connecting pieces such that this unit is directly fixed on the filter element 1 and merely connected to the filtrate outlet 53 by means of one connection piece. In this arrangement, the filtrate consequently is collected and discharged in the filtrate collection chamber 58 and in the filtrate collection device 30 and combined outside the filter housing.

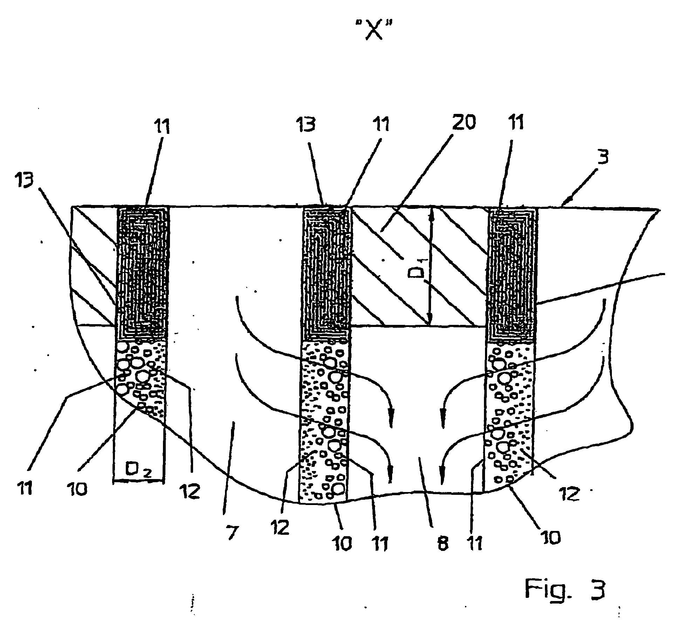

Figure 3 shows an enlarged representation of the detail X in Figure 2, wherein the walls 10 are illustrated in greater detail. The support member 11 that forms the main component of the walls 10 consists of a macroporous ceramic material with pore sizes in the order of 5-20 µm. The material used for this purpose preferably consists of aluminum oxide.

On the side of the fluid to be filtered, the walls 10 are covered with a membrane layer 12 that has a thickness of 10-200 µm. This microporous membrane layer 12 is adapted to the filtration task and preferably has average pore sizes in the order of 0.005-1.2 µm. During the filtration process, the fluid penetrates into the macroporous support structure 11 from the membrane layer 12 and flows into the closest filtrate channel 8 in the form of filtrate. This means that the membrane layer essentially defines the filtration effect.

On the side of the filtrate channels, the walls 10 are not covered with such a membrane layer such that the filtrate can flow into the filtrate channels 8 in an unobstructed fashion as indicated by the arrows.

On the inflow side, the filtrate channel 8 is closed with a fluid-tight sealing element 20 that, for example, consists of aluminum oxide or cement. The sealing element 20 is inserted into the filtrate channel 8 in a fluid tight fashion and, for example, bonded thereto. The walls 1D of the filter element are sealed by means of a sealing material, e.g., Teflon, in the regions identified by the reference symbol 13, namely in such a way that no bypasses which could impair the result of the filtration process are created. These regions 13 extend downward from the end face 3 by at least the thickness D₁ of the sealing element 20.

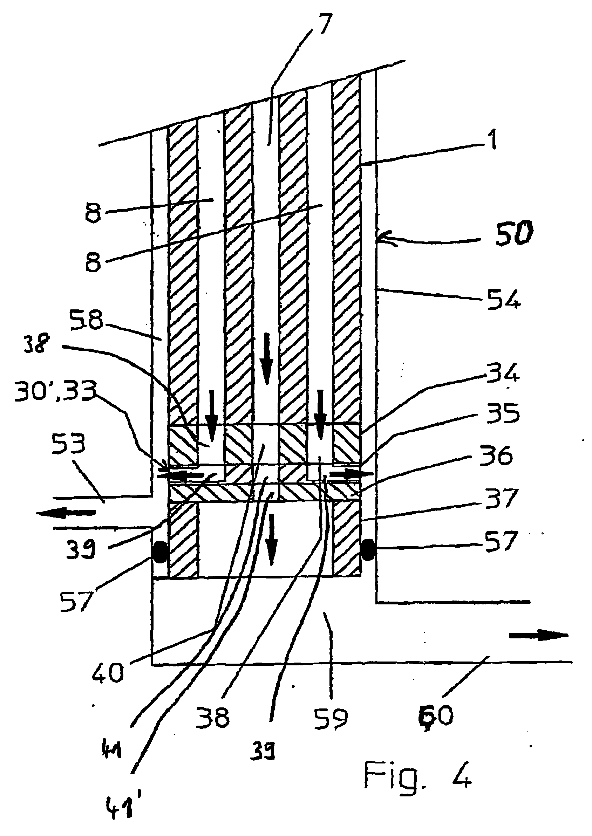

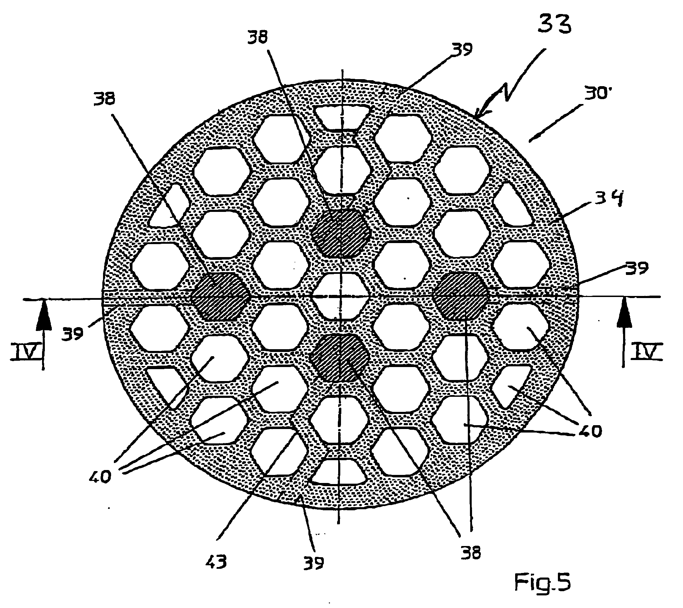

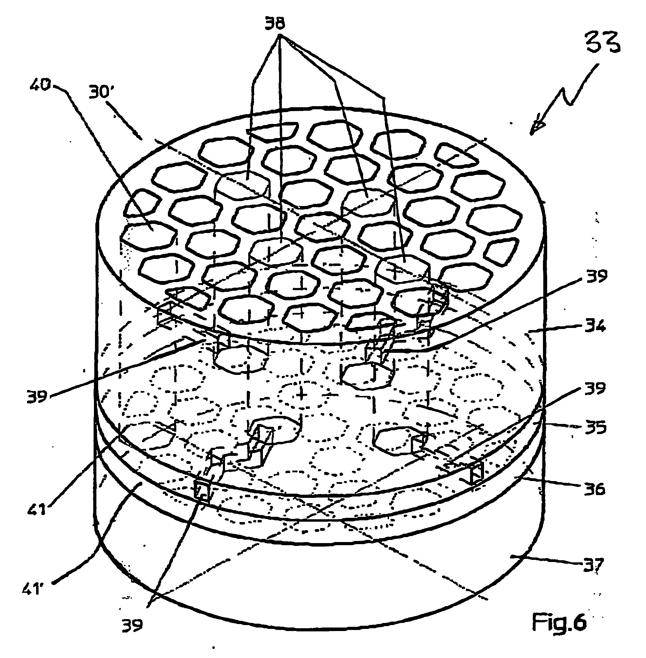

Figure 4 schematically shows another embodiment of the filter apparatus, wherein one channel 7 for fluid to be filtered is respectively arranged between two filtrate channels. 8. The filtrate collection device 30' of this embodiment consists of a collecting disk 33 that is illustrated in greater detail in Figures 5 and 6. The collecting disk 33 has a diameter that this adapted to the diameter of the filter element 19. The collecting disk 33 consequently forms an extension of the filter element 1 and, according to the embodiment shown, consists of a first plate 34, an intermediate plate 35 and a second plate 36 as illustrated in greater detail in Figure 6. Filtrate openings 38 that extend down to the corresponding filtrate collecting channels 39 in the intermediate plate 35 are situated in the first plate 34. In Figures 4 and 6, a separate filtrate collecting channel 39 is provided for each filtrate opening 38. Depending on the arrangement of the filtrate openings, it would also be possible to connect all openings to one another via a single collecting channel 39 and to discharge the filtrate radially outward.

The first plate 34 is also provided with openings 40 for fluid to be filtered, wherein these openings continue in the intermediate plate 35 and the second plate 36 in the form of corresponding openings 41, 41' such that the unfiltered fluid is able to flow into the collection chamber 59 for this fluid and can be discharged through the outlet 60 for unfiltered fluid. The second plate 36 contains an annular wall 37 that is fixed on the peripheral housing wall 54 by means of the sealing elements 57. This arrangement has the advantage that the filtrate can be introduced into the already existing filtrate collection chamber 58 such that only one filtrate outlet 53 is required. This is the reason why the sealing elements 57 are arranged below the filtrate outlet 53.

Figure 5 shows a top view of the first plate 34 of the collecting disk 33. This collection device consists of a simplified variation with four filtrate openings 38 in the plane of section IV-IV. These four filtrate openings are open although they are illustrated with a hatching. Due to the arrangement of the openings 40 for fluid to be filtered, the filtrate collecting channel or the individual filtrate collecting channels 39 need to extend outward through the webs 43 arranged between the openings.

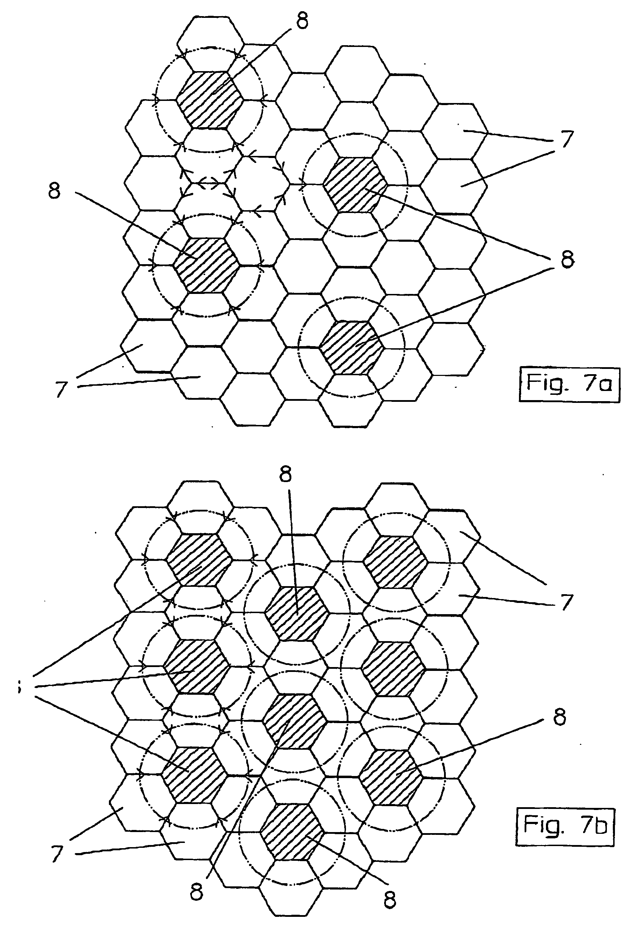

Figures 7a and 7b show other arrangements of filtrate channels and channels for fluid to be filtered in a filter element the honeycomb structure of which is also present in the collecting disk 33 in this case. Figure 7a shows an arrangement, in which two respective channels 7 for fluid to be filtered are respectively arranged between two filtrate channels 8. Approximately 11 % of the end face of the filter element are occupied by channels for fluid to be filtered.

Figure 7b shows another embodiment with a strictly alternating arrangement of filtrate channels and channels for fluid to be filtered 7, B. In this case, each channel 7 for fluid to be filtered respectively borders on two filtrate channels 8.

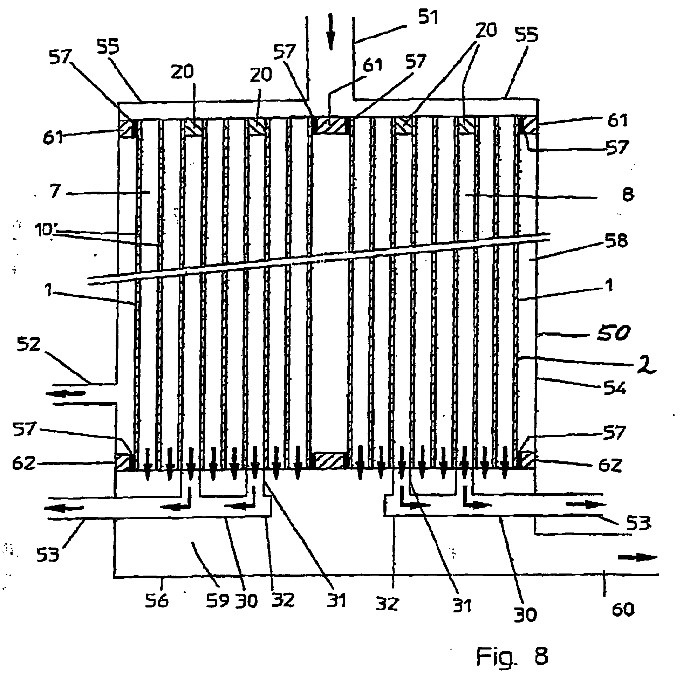

Figure 8 shows a section through a filter apparatus that, for example, contains two filter elements 1 that respectively comprise separate filtrate collection devices 30. The two filter elements 1 are held by an upper perforated plate 61 and a lower perforated plate 62 that are provided with sealing elements 57. The filtrate collection chamber 58 is situated between the housing wall 54 of the filter element 50 and the peripheral wall 2 of the filter elements 1, as well as the two perforated plates 61, 62. The two collecting pipes 32 respectively extend outward through the housing wall 54.

### LIST OF REFERENCE SYMBOLS

- 1: Filter element
- 2: Peripheral wall
- 3: Upper end face
- 4: Lower end face
- 6: Flow channel
- 7, 7': Channel for fluid to be filtered
- 8: Filtrate channel
- 10: Wall
- 11: Support member
- 12: Membrane layer
- 13: Sealing layer
- 20: Sealing element
- 30, 30': Filtrate collection device
- 31: Pipe/hose
- 32: Collecting pipe
- 33: Collecting disk
- 34: First plate
- 35: Intermediate plate
- 36: Second plate
- 37: Annular wall
- 38: Filtrate opening
- 39: Filtrate collecting channel
- 40: Opening for unfiltered fluid
- 41, 41': Opening for unfiltered fluid
- 42: Filtrate collection chamber
- 50: Filter housing
- 51: Inlet for unfiltered fluid
- 52: First filtrate outlet
- 53: Second filtrate outlet
- 54: Housing wall
- 55: Upper wall
- 56: Lower wall
- 57: Seal
- 58: Filtrate collection chamber
- 59: Collection chamber for unfiltered fluid
- 60: Outlet for unfiltered fluid
- 61: Upper perforated plate
- 62: Lower perforated plate

## Claims

1. A filter element, in particular, a ceramic filter element, for the cross-flow filtration of fluids, in particular, of liquids, with an oblong one-piece, macroporous support member (11) comprising flow channels (7) for unfiltered fluid that are open on both ends and extend from the inflow end of the support member to the outflow end of the support member, said channels (7) for unfiltered fluid each being lined with a microporous membrane layer (12), and several additional flow channels (8) for discharging filtrate (filtrate channels) arranged In said support member parallel to the channels (7) for unfiltered fluid, said filtrate channels (8) being closed at the inflow end of the support member, open on the outflow end of the support member and not lined with a microporous membrane layer;
wherein said filtrate channels (8) are provided between the channels (7, 7') for unfiltered fluid in a regular arrangement, wherein each filtrate channel (8) is surrounded by at least three channels (7, 7') for unfiltered fluid;
wherein all filtrate channels (8) are connected to a common filtrate collection device (30, 30') on their outflow side to discharge the filtrate; and
wherein the peripheral surface of the filter element contributes to the draining of filtrate.

2. The filter element according to Claim 1, wherein each channel (7, 7') for unfiltered fluid is situated adjacent to at least one filtrate channel (8).

3. The filter element according to Claim 1 or 2, wherein said two channels (7, 7') for unfiltered fluid are respectively arranged between two filtrate channels (8).

4. The filter element according to one of Claims 1-3, wherein said flow channels (7, 8) have a polygonal cross section.

5. The filter element according to one of Claims 1-4, wherein said support member (11) of the filter element and/or the membrane layer (12) consist(s) of aluminum oxide, silicone carbide, titanium dioxide, silicone dioxide, zirconium oxide, calcium aluminate or aluminosilicates.

6. The filter element according to one of Claims 1-5, wherein said membrane layer (12) has an average pore size between 0.005 and 1.2 µm.

7. The filter element according to one of Claims 1-6, wherein said filtrate collection device (30) comprises pipes (31) or hoses that are connected to the filtrate channels (8) with one end and to a common collecting pipe (32) with the other end.

8. The filter element according to one of Claims 1-6, wherein said filtrate collection device (30') comprises a collecting disk (33) that is fixed on the support member (11) on the outflow end thereof.

9. The filter element according to Claim 8, wherein said collecting disk (33) contains filtrate openings and openings for unfiltered fluid (38, 40, 41), as well as at least one collecting channel (39), wherein the filtrate openings (38) lead into the at least one collecting channel (39).

10. The filter element according to Claim 9, wherein said at least one collecting channel (39) ends at the outer periphery of the collecting disk (33).

11. An apparatus for the cross-flow filtration of fluids, in particular of liquids, with at least one filter element (1), in particular, a ceramic filter element, and with a filter housing (50) with an inlet (51) for unfiltered fluid, a collection chamber (59) for unfiltered fluid, a filtrate collection chamber (58) and a filtrate outlet (52), wherein the filter element is inserted into the filter housing, wherein said at least one filter element is a filter element (1) according to any one of Claims 1-10, wherein said filtrate collection device (30, 30') limits the filtrate channels (8) relative to the collection chamber (59) for unfiltered fluid.

12. The apparatus according to Claim 11, wherein said filtrate collection device (30) contains a collecting pipe (32) that leads outward through the wall of the filter housing.

13. The apparatus according to Claim 11, wherein said collecting channel (39) of the filtrate collection device (30') leads into the filtrate collection chamber (58) at the outer periphery of the filter element (1).

14. The apparatus according to Claim 11, wherein said filtrate collection devices (30, 30') are connected to a common filtrate discharge line.

## Patentansprüche

1. Filterelement, insbesondere keramisches Filterelement, für die Cross-Flow-Filtration von Fluiden, insbesondere von Flüssigkeiten, mit einem langgestreckten einstückigen grobporösen Stützkörper (11), in dem beidseitig offene, sich von der Anström- bis zur Abströmseite des Stützkörpers erstreckende Strömungskanäle (7) für das zu filtrierende Fluid angeordnet sind, wobei die Kanäle (7) für das zu filtrierende Fluid mit einer feinporösen Membranschicht (12) ausgekleidet sind, und in dem mehrere zusätzliche Strömungskanäle (8) zum Abführen von Filtrat (Filtratkanäle) parallel zu den Kanälen (7) für das zu filtrierende Fluid angeordnet sind, wobei die Filtratkanäle (8) auf der Anströmseite des Stützkörpers geschlossen und auf der Abströmseite des Stützkörpers offen sind und nicht mit einer feinporösen Membranschicht ausgekleidet sind;
wobei die Filtratkanäle (8) in einer regelmäßigen Anordnung zwischen den Kanälen (7, 7') für das zu filtrierende Fluid angeordnet sind, wobei jeder Filtratkanal (8) von mindestens drei Kanälen (7, 7') für das zu filtrierende Fluid umgeben ist;
wobei alle Filtratkanäle (8) abströmseitig mit einer gemeinsamen Filtratsammeleinrichtung (30, 30') verbunden sind, um das Filtrat abzuführen; und
wobei die Umfangsoberfläche des Filterelementes zum Abführen von Filtrat beiträgt.

2. Filterelement nach Anspruch 1, wobei jeder Unfiltratkanal (7, 7') mindestens einem Filtratkanal (8) benachbart ist.

3. Filterelement nach Anspruch 1 oder 2, wobei zwischen jeweils zwei Filtratkanälen (8) jeweils zwei Kanäle (7, 7') für das zu filtrierende Fluid angeordnet sind.

4. Filterelement nach einem der Ansprüche 1 bis 3, wobei der Querschnitt der Strömungskanäle (7, 8) polygonal ist.

5. Filterelement nach einem der Ansprüche 1 bis 4, wobei der Stützkörper (11) des Filterelementes und/oder die Membranschicht (12) aus Aluminiumoxid, Siliciumcarbid, Titandioxid, Siliciumdioxid, Zirconoxid, Calciumaluminat oder Aluminosilicaten besteht.

6. Filterelement nach einem der Ansprüche 1 bis 5, wobei die Membranschicht (12) eine mittlere Porengröße zwischen 0,005 und 1,2 µm aufweist.

7. Filterelement nach einem der Ansprüche 1 bis 6, wobei die Filtratsammeleinrichtung (30) Rohre (31) oder Schläuche umfasst, die einerseits an die Filtratkanäle (8) und andererseits an ein gemeinsames Sammelrohr (32) angeschlossen sind.

8. Filterelement nach einem der Ansprüche 1 bis 6, wobei die Filtratsammeleinrichtung (30') eine Sammelscheibe (33) umfasst, die abströmseitig am Stützkörper (11) befestigt ist.

9. Filterelement nach Anspruch 8, wobei die Sammelscheibe (33) Filtrat- und Öffnungen (38, 40, 41) für das zu filtrierende Fluid und mindestens einen Sammelkanal (39) aufweist, wobei die Filtratöffnungen (38) in den mindestens einen Sammelkanal (39) münden.

10. Filterelement nach Anspruch 9, wobei der mindestens eine Sammelkanal (39) am Außenumfang der Sammelscheibe (33) mündet.

11. Vorrichtung für die Cross-Flow-Filtration von Fluiden, insbesondere von Flüssigkeiten, mit mindestens einem Filterelement (1), insbesondere einem keramischen Filterelement, und mit einem einen Zulauf (51) für zu filtrierendes Fluid, einen Sammelraum (59) für zu filtrierendes Fluid, einen Filtratsammelraum (58) und einen Filtratablauf (52) aufweisenden Filtergehäuse (50), wobei das Filterelement in dem Filtergehäuse eingesetzt ist, wobei das mindestens eine Filterelement einem Filterelement (1) gemäß einem der Ansprüche 1 bis 10 entspricht, wobei die Filtratsammeleinrichtung (30, 30') die Filtratkanäle (8) gegen den Sammelraum (59) für zu filtrierendes Fluid abgrenzt.

12. Vorrichtung nach Anspruch 11, wobei die Filtratsammeleinrichtung (30) ein Sammelrohr (32) aufweist, das durch die Wand des Filtergehäuses nach außen geführt ist.

13. Vorrichtung nach Anspruch 11, wobei der Sammelkanal (39) der Filtratsammeleinrichtung (30') am Außenumfang des Filterelementes (1) in den Filtratsammelraum (58) mündet.

14. Vorrichtung nach Anspruch 11, wobei die Filtratsammeleinrichtungen (30, 30') an eine gemeinsame Filtratabführleitung angeschlossen sind.

## Revendications

1. Elément filtrant, en particulier un élément filtrant en céramique, destiné à la filtration à écoulement transversal de fluides, en particulier de liquides, avec un élément de support d'une seule pièce, allongé, macroporeux (11) comprenant des canaux d'écoulement (7) pour un fluide non filtré, lesquels sont ouverts à chaque extrémité et s'étendent de l'extrémité d'admission de l'élément de support jusqu'à l'extrémité de sortie de l'élément de support, lesdits canaux (7) pour un fluide non filtré étant chacun garni d'une couche de membrane microporeuse (12), et une pluralité de canaux d'écoulement supplémentaires (8) pour l'évacuation du filtrat (canaux pour filtrat) agencés dans ledit élément de support parallèlement aux canaux (7) pour un fluide non filtré, lesdits canaux pour filtrat (8) étant fermés au niveau de l'extrémité d'admission de l'élément de support, ouverts au niveau de l'extrémité de sortie de l'élément de support et non garnis d'une couche de membrane microporeuse ;
dans lequel lesdits canaux pour filtrat (8) sont fournis entre les canaux (7, 7') pour un fluide non filtré sous la forme d'un agencement régulier, dans lequel chaque canal pour filtrat (8) est entouré par au moins trois canaux (7, 7') pour un fluide non filtré ;
dans lequel tous les canaux pour filtrat (8) sont connectés à un dispositif commun de collection de filtrat (30, 30') au niveau de leur extrémité de sortie de façon à évacuer le filtrat ; et
dans lequel la surface périphérique de l'élément de filtration contribue à drainer le filtrat.

2. Elément filtrant selon la revendication 1, dans lequel chaque canal (7, 7') pour un fluide non filtré est situé à côté d'au moins un canal pour filtrat (8).

3. Elément filtrant selon la revendication 1 ou 2, dans lequel lesdits deux canaux (7, 7') pour un fluide non filtré sont respectivement agencés entre deux canaux pour filtrat (8).

4. Elément filtrant selon l'une quelconque des revendications 1 à 3, dans lequel lesdits canaux d'écoulement (7, 8) ont une coupe transversale polygonale.

5. Elément filtrant selon l'une quelconque des revendications 1 à 4, dans lequel l'élément de support (11) de l'élément filtrant et/ou la couche de la membrane (12) sont constitués d'oxyde d'aluminium, de carbure de silicium, de dioxyde de titane, de dioxyde de silicium, d'oxyde de zirconium, d'aluminate de calcium ou d'aluminosilicates.

6. Elément filtrant selon l'une quelconque des revendications 1 à 5, dans lequel ladite couche de la membrane (12) a une dimension moyenne de pores comprise entre 0,005 et 1,2 µm.

7. Elément filtrant selon l'une quelconque des revendications 1 à 6, dans lequel ledit dispositif de collection de filtrat (30) comprend des tuyaux (31) ou des conduites qui sont reliées aux canaux pour filtrat (8) au niveau d'une extrémité et à un tuyau collecteur commun (32) au niveau de l'autre extrémité.

8. Elément filtrant selon l'une quelconque des revendications 1 à 6, dans lequel ledit dispositif de collection de filtrat (30') comprend un disque de collection (33) qui est fixé sur l'élément de support (11) au niveau de l'extrémité de sortie de celui-ci.

9. Elément filtrant selon la revendication 8, dans lequel le disque de collection (33) contient des ouvertures pour filtrat et des ouvertures pour un fluide non filtré (38, 40, 41), et également au moins un canal de collection (39), dans lequel les ouvertures pour filtrat (38) mènent dans au moins un canal de collection (39).

10. Elément filtrant selon la revendication 9, dans lequel ledit au moins un canal de collection (39) se termine au niveau de la périphérie externe du disque de collection (33).

11. Appareil de filtration à écoulement transversal de fluides, en particulier de liquides, avec au moins un élément filtrant (1), en particulier un élément filtrant en céramique et avec un logement de filtre (50) équipé d'une admission (51) pour un fluide non filtré, une chambre de collection (59) pour un fluide non filtré, une chambre de collection de filtrat (58) et une sortie pour filtrat (52), dans lequel l'élément filtrant est inséré dans le logement de filtre, dans lequel ledit au moins un élément filtrant est un élément filtrant (1) selon l'une quelconque des revendications 1 à 10, dans lequel le dispositif de collection de filtrat (30, 30') limite les canaux pour filtrat (8) par rapport à la chambre de collection (59) pour un fluide non filtré.

12. Appareil selon la revendication 11, dans lequel ledit dispositif de collection de filtrat (30) contient un tuyau collecteur (32) qui mène à l'extérieur par la paroi du logement de filtre.

13. Appareil selon la revendication 11, dans lequel ledit canal de collection (39) du dispositif de collection de filtrat (30') mène dans la chambre de collection de filtrat (58) au niveau de la périphérie externe de l'élément filtrant (1).

14. Appareil selon la revendication 11, dans lequel les dispositifs de collection de filtrat (30, 30') sont reliés à une ligne d'évacuation commune du filtrat.
